# EUROPEAN PATENT APPLICATION

(11) **EP 4 242 853 A1**
(43) Date of publication of application: **13.09.2023**
(21) Application number: 22305264.8
(22) Date of filing: 08.03.2022
(51) Int. Cl.: G06F 11/36, G06F 9/00, G06F 11/30, G06F 40/00

(54) **A METHOD AND DEVICE FOR REDUCING THE CARBON FOOTPRINT OF A SOFTWARE APPLICATION**

(71) Applicant: ATOS FRANCE, 95870 Bezons (FR)
(72) Inventor: Balasubramanian, Padmanabhan, Chennai (IN); Sitani, Rohini, Chennai (IN); Balaji, Indumathi, Chennai (IN); Anantharama Kesavan, Jayakumar, Chennai (IN); Radha, Yogeswari, Chennai (IN)
(74) Representative: Argyma

(57) **Abstract**

A method for reducing the carbon footprint of a software application during a test phase comprising the steps of calculating (S1) the unitary carbon footprint of each application scenario of a determined set of application scenarios, estimating (S2) the number of executions of each application scenario of the determined set of application scenarios over a predetermined period of time, calculating (S3) the total carbon footprint of each application scenario over said predetermined period of time using the calculated unitary carbon footprint and the estimated number of executions of each application scenario, determining (S4) a subset of the set of application scenarios using at least the total carbon footprint of each application scenario, modifying or removing (S6) from the software application at least one application scenario of the determined subset to reduce the carbon footprint of the software application.

## Description

### [Field of the invention]

The field of the invention relates to the reduction of carbon footprints in information and communication technology and, more particularly, to a device and a method for reducing the carbon footprint of a software application.

### [Background of the invention]

In the field of software, the development of an application software comprises drafting the requirements, designing the tests by defining the application scenarios (design test phase), executing the application scenarios (execution test phase), and optionally retesting detected defaults before placing the application in the production phase.

Applications comprise features that allow to perform series of operations using user terminals, servers, communication networks or other entities like, for example, printers, scanners or external storage devices. To this end, the applications use the hardware or resources of these different entities such as e.g. connectors, adapters, circuit boards, memory cards, hard disk drive, paper, etc. Consequently, each application may be associated with a total carbon footprint over a period of time when used in production.

It is therefore an object of the present invention to provide a device and method for reducing the total carbon footprint of a software application.

### [Summary of the invention]

In order to reduce the carbon footprint of a software application, one goal of the invention is to determine the potential carbon footprint of said application before placing the application in a production mode (i.e. during test phase). Another goal of the invention is to offer the possibility to modify or remove high-value carbon footprint features of an application before placing the application in a production mode (i.e. during test phase). Another goal of the invention is to provide a simple and efficient solution for reducing carbon footprint in the computer and internet technology industry.

To this end, the present invention concerns a method for reducing the carbon footprint of a software application, said software application being characterized by a set of application features, said method, operated during the test phase of the software application, comprising the steps of, for at least one determined set of application scenarios for testing at least some of said application features and for each set of application scenarios:
- calculating the unitary carbon footprint of each application scenario of the determined set of application scenarios,
- estimating the number of executions of each application scenario of the determined set of application scenarios over a predetermined period of time,
- calculating the total carbon footprint of each application scenario over said predetermined period of time using the calculated unitary carbon footprint and the estimated number of executions of each application scenario,
- determining a subset of the set of application scenarios using at least the calculated total carbon footprint,
- modifying or removing from the software application at least one application scenario of the determined subset to reduce the carbon footprint of the software application.

The application features of the application correspond to the functionalities of the application and their use. For example, applications features may be sending mails to a distribution list or to an individual on a periodic basis, printing reports either on a physical paper or generating a softcopy of reports like saving them as PDF, image, etc.

An application scenario may correspond to an end-to-end scenario comprising several steps or to a single use case (for example to test a single step of an end-to-end scenario or a single feature of the application). Each application scenario is defined by a plurality of terms called "the application scenario definition", which may be a short title and/or a full detailed paragraph.

The method according to the invention may be operated during the design of the tests or during the execution of the tests. The method according to the invention allows to determine the carbon footprints of different application scenarios during the test phase of the application in order to modify and/or remove one or several high-value carbon footprint features of the software application, reducing therefore the level of green gas emissions when the software application is used in production phase. The use of the number of executions of each application scenario over a period of time allows to evaluate accurately the total carbon footprint of each application scenario and the impact that the application scenario will have on the environment during production phase. The method allows to recommend remedial actions based on knowledge database to modify or remove features based on the business impact of application scenarios and/or the number of executions of said application scenarios expected during the use of the software application in production.

The period of time may be equal to one month or, preferably, to one year as a year corresponds to a standard reference duration for comparing different carbon footprints.

Preferably, the determination of the subset of each set comprises selecting only the application scenarios for which the total carbon footprint of each application scenario is lower than a predetermined threshold.

The threshold may be predetermined in order to provide remediation (amend / replace / remove) application scenarios in the subset, for example application scenarios having a carbon footprint smaller than 500 kg.

Advantageously, the method comprises, between the step of determining a subset of the set of application scenarios and the step of modifying or removing at least one application scenario of the determined subset, a step of selecting, automatically or manually, the at least one application scenario to be modified or removed based on the business impact of said application scenario and/or the number of execution of said application scenario expected during the use of the software application in production.

In an embodiment, the calculation of the unitary carbon footprint comprises the steps, for each application scenario, of:
- identifying a set of keywords in the application scenario definition,
- mapping at least one keyword of the set of keywords to at least one category into a knowledge database,
- retrieving the carbon footprint value of each mapped category in the knowledge database,
- calculating the unitary carbon footprint of the application scenario by summing up the carbon footprint values for all mapped reference types.

Keywords may be deducted from primary input data such as application features description and/or requirement description or user stories, or from secondary input data such as test cases that are related to primary input data. The identification of the set of keywords may be done using a Natural Language Processing (NLP)-based analysis.

When primary input data are not provided or not sufficiently detailed to identify keywords, relevant application scenarios and test cases may be retrieved from a test case repository (i.e. a database) by applying NLP techniques. Such techniques may comprise re-processing the application features, tokenizing and retrieving relevant test cases from test repository by referencing to the knowledge base. Retrieved test cases form the secondary input data that may then be mapped with the primary input data to further identify the potential carbon footprint of the application scenario.

In an embodiment, the identification of the set of keywords in the application scenario definition comprises:
- reading the terms of the application scenario definition in an application case repository,
- correcting spelling errors,
- tokenizing the corrected terms, preferably by applying a N-Gram technique,
- removing meaning-redundant words and stop words.

Stemming and lemmatization may be used to improve efficiency of the resultant tokens. By applying lemmatization, the root word of the tokens is analyzed to improve the matching to keywords of the knowledge database categories.

The method according to the invention may be operated on several different sets of application scenarios of the software application in order to allow to test features independently.

In an embodiment, the method is operated simultaneously on several different sets of application scenarios of the software application in order to test the software application faster while limiting the carbon footprint during the execution of the tests.

In an embodiment, the threshold may be different for each set among the several different sets of application scenarios of the software application.

The invention also relates to a computer program product characterized in that it comprises a set of program code instructions which, when executed by one or more processors, configure said processor or processors to implement the method as described here before.

The invention also relates to a device configured to operate the method as presented before.

The invention relates to a device for reducing the carbon footprint of a software application, said software application being characterized by a set of application features, said device being configured, for at least one determined set of application scenarios for testing at least some of said application features and for each set of application scenarios, to:
- calculate the unitary carbon footprint of each application scenario of the determined set of application scenarios,
- estimate the number of executions of each application scenario of the determined set of application scenarios over a predetermined period of time,
- calculate the total carbon footprint of each application scenario over said predetermined period of time using the calculated unitary carbon footprint and the estimated number of executions of each application scenario,
- determine a subset of the set of application scenarios using at least the calculated total carbon footprint,
- modify or remove from the software application at least one application scenario of the determined subset to reduce the carbon footprint of the software application.

Preferably, the device is a computing device.

The period of time may be equal to one month or, preferably, to one year as a year corresponds to a standard reference duration for comparing different carbon footprints.

Preferably, for determining the subset of each set, the device is configured to select only the application scenarios for which the total carbon footprint of each application scenario is lower than a predetermined threshold.

The threshold may be predetermined in order to provide remediation (amend / replace / remove) application scenarios in the subset, for example application scenarios having a carbon footprint smaller than 500 kg.

Advantageously, the device is configured to select, automatically or manually, the at least one application scenario to be modified or removed based on the business impact of said application scenario and/or the number of executions of said application scenario expected during the use of the software application in production.

In an embodiment, for calculating the unitary carbon footprint for each application scenario, the device is configured to:
- identify a set of keywords in the application scenario definition,
- map the set of keywords to a least one reference type,
- retrieve the carbon footprint of each reference type into a knowledge database,
- calculate the unitary carbon footprint of the application scenario by summing up the carbon footprint values for all mapped reference types.

Keywords may be deducted from primary input data such as application features description and/or requirement description or user stories, or from secondary input data such as test cases that are related to primary input data. The identification of the set of keywords may be done using a Natural Language Processing (NLP)-based analysis.

When primary input data are not provided or not sufficiently detailed to identify keywords, relevant application scenarios and test cases may be retrieved from a test case repository (i.e. a database) by applying NLP techniques. Such techniques may comprise re-processing the application features, tokenizing and retrieving relevant test cases from test repository by referencing to the knowledge base. Retrieved test cases form the secondary input data that may then be mapped with the primary input data to further identify the potential carbon footprint of the application scenario.

The device according to the preceding claim, wherein, for identifying the set of keywords in the application scenario definition, the device is further configured for:
- read the terms of the application scenario definition in an application case repository,
- correct spelling errors,
- tokenize the corrected terms,
- remove meaning-redundant (e.g. words similar in meaning or duplicates) words and stop words.

In an embodiment, the device is configured to operate on several different sets of application scenarios of the software application to allow to test features independently.

In an embodiment, the device is configured to operate simultaneously on several different sets of application scenarios of the software application.

In an embodiment, the threshold may be different for each set among the several different sets of application scenarios of the software application.

The invention also relates to a computing system for reducing the carbon footprint of a software application during a test phase, said software application being characterized by a set of application features, said computing system comprising a device as described here before and a knowledge database.

### [Brief description of the drawings]

These and other features, aspects, and advantages of the present invention are better understood with the following Detailed Description of the Preferred Embodiments, appended Claims, and accompanying Figures, where:
[FIG 1] schematically illustrates an embodiment of the system according to the invention.
[FIG 2] schematically illustrates an example of two sets of application scenarios of a software application.
[FIG 3] schematically illustrates an embodiment of the method according to the invention.

### [Detailed description]

The Specification, which includes the Summary of Invention, Brief Description of the Drawings and the Detailed Description of the Preferred Embodiments, and the appended Claims refer to particular features (including process or method steps) of the invention. Those of skill in the art understand that the invention includes all possible combinations and uses of particular features described in the Specification. Those of skill in the art understand that the invention is not limited to or by the description of embodiments given in the Specification. Those of skill in the art also understand that the terminology used for describing particular embodiments does not limit the scope or breadth of the invention. In interpreting the Specification and appended Claims, all terms should be interpreted in the broadest possible manner consistent with the context of each term. All technical and scientific terms used in the Specification and appended Claims have the same meaning as commonly understood by one of ordinary skill in the art to which this invention belongs unless defined otherwise.

As used in the Specification and appended Claims, the singular forms "a", "an", and "the" include plural references unless the context clearly indicates otherwise. The verb "comprises" and its conjugated forms should be interpreted as referring to elements, components or steps in a non-exclusive manner. The referenced elements, components or steps may be present, utilized or combined with other elements, components or steps not expressly referenced.

The invention encompasses and bounds smaller ranges of the interval subject to any specific exclusion provided. Where the Specification and appended Claims reference a method comprising two or more defined steps, the defined steps can be carried out in any order or simultaneously except where the context excludes that possibility.

Reference will now be made in detail to specific embodiments or features, examples of which are illustrated in the accompanying drawings. Wherever possible, corresponding or similar reference numbers will be used throughout the drawings to refer to the same or corresponding parts.

Moreover, references to various elements described herein are made collectively or individually when there may be more than one element of the same type. However, such references are merely exemplary in nature. It may be noted that any reference to elements in the singular may also be construed to relate to the plural and vice-versa without limiting the scope of the disclosure to the exact number or type of such elements unless set forth explicitly in the appended claims.

Aspects of the present disclosure are directed to the functional features of an application running on a computing device, such as a server unit or a computer.

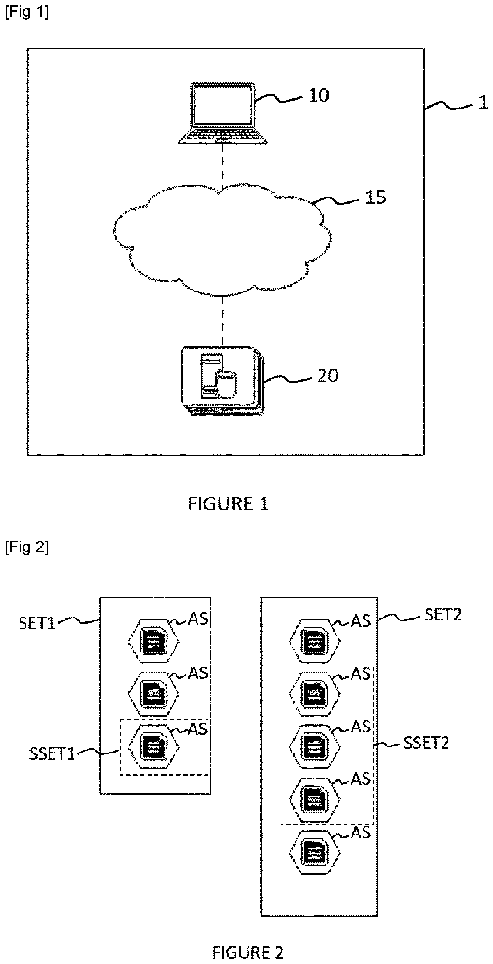

Figure 1 schematically illustrates a computing system 1 according to the invention. The system 1 allows to identify and recommend remediating high carbon footprint of a software application during the test phase (i.e. before the operational phase).

The carbon footprint of a software application or digital carbon footprint is defined as the total carbon footprint generated by the execution of transactions including viewing, and processing (in particular the production of data, the use of data and the transfer of data that are operated when running the software application). The operation of the software application triggers the use of one or several features of said software application, depending on the scenario or use case which is run. The carbon footprint of the software application can be either instantaneous, an average over a period of time or a total over a period of time.

In the framework of the invention, the software application is characterized by a set of application features. For example, an application may be characterized by user interfaces (e.g. SMS (Short Message Service) notifications, plain text mails, mails with an image or attachment...).

In reference to Figure 1, the system 1 comprises a computing device 10 and a knowledge database 20 connected via a communication network 15. Preferably, the device is a computing device.

Figure 2 schematically illustrates an example of two sets SET1, SET2 of application scenarios AS. The device 10 is configured to determine one or several sets (or lists) SET1, SET2 of application scenarios AS for testing the application features of the software application. Alternatively, a user can determine and indicate to the device 10 one or several sets SET1, SET2 of application scenarios AS for testing the application features of the software application.

An application scenario AS may be a single test case or a whole test scenario as known in the art of testing. A test case is used to test one or several determined features independently whereas a test scenario corresponds to a series of features that will be performed by a user when the application will be used in an operational context.

Each application scenario AS involve the use of one or several application features of the software application and is defined by a plurality of terms (words, alphanumerical characters, codes, etc.) called "the application scenario definition". The application scenario definition may be a title or a full paragraph. Application scenarios definitions may be stored in an application scenario repository of a memory zone of the device 10 or accessible to the device 10 or in the knowledge database 20.

The device 10 is configured to calculate the unitary carbon footprint of each application scenario AS of each determined set SET1, SET2 of application scenarios AS.

In an embodiment, in order to calculate the unitary carbon footprint for each application scenario, the device 10 is configured to identify a set of keywords in the application scenario definition, map the set of keyword to one or several categories stored in the knowledge database 20, retrieve the carbon footprint of each category from the knowledge database 20, calculate the unitary carbon footprint of the application scenario AS by summing up the carbon footprint values for all mapped categories.

For example, the knowledge database 20 may comprise the following sets of keywords, categories and unitary carbon footprint.

**[Table 1]**

| **Keywords** | **Category** | **Size** | **Unitary Carbon Footprint (UCF)** |
|---|---|---|---|
| Laser Printer Print | Direct | Single A4 Page | 1.0 g |
| PDF Generation | Indirect | (200 KB) | 295.0 g |
| Image - Load | Indirect | (PNG ^{~} 100 KB) | 147.5 g |

Preferably, the device 10 is configured to identify a set of keywords in an application scenario definition using Natural Language Processing analysis.

For example, N-gram techniques may be applied to match each keyword with a given reference type stored in the knowledge database 20.

In an embodiment, in order to identify the set of keywords in the application scenario definition, the device 10 is configured to read the terms of the application scenario AS definition in an application case repository (e.g. stored in the device 10 or accessible to the device 10), correct spelling errors, and remove stop words and duplicates to obtain a list of tokens, the mapping to the at least one category being done using said obtained list of tokens. Stemming and/or lemmatization may be applied to find the root element of the tokens and remove duplicates.

The device 10 is configured to estimate the number of executions of each application scenario AS of a determined set SET1, SET2 of application scenario AS over a predetermined period of time. The period of time may be equal to one month or, preferably, to one year.

The device 10 is configured to calculate the total carbon footprint of each application scenario AS of a given set SET1, SET2 of application scenarios AS over said predetermined period of time using the calculated unitary carbon footprint and the estimated number of executions of each application scenario AS.

The device 10 is configured to determine, for each set SET1, SET2 of application scenarios AS, a subset (respectively SSET1, SSET2) of application scenarios AS using at least the calculated total carbon footprint.

In an embodiment, the device 10 is configured to determine the subset SSET1, SSET2 for the application scenario AS for which the total carbon footprint of each application scenario AS is lower than a predetermined threshold.

The device 10 is configured to modify or remove at least one application scenario AS of the determined subset SSET1, SSET2 from the software application to reduce the carbon footprint of said software application.

The predetermined threshold allows to determine the application scenarios AS of a set SET1, SET2 which have the least carbon footprints (i.e. the lowest impact on the environment) among the application scenarios of a given set. The predetermined threshold may be a carbon footprint value that correspond to a percentage of the highest carbon footprints that is greater than the threshold (e.g. 500 kg). The predetermined threshold may be different between different set SET1, SET2 of application scenarios AS.

The device 10 is configured to run the software application only using the application scenarios AS of each determined subset SSET1, SSET2.

In an embodiment, the device 10 is configured to select, automatically or manually, the at least one application scenario AS to be modified or removed based on the business impact of said application scenario AS and/or the number of executions of said application scenario AS expected during the use of the software application in production.

The device 10 may be operated to configure to operate on several different sets of application scenarios AS of the software application, in particular to test features independently.

In an embodiment, the device 10 is configured to operate simultaneously on several different sets SET1, SET2 of application scenarios AS of the software application.

### Example of operation

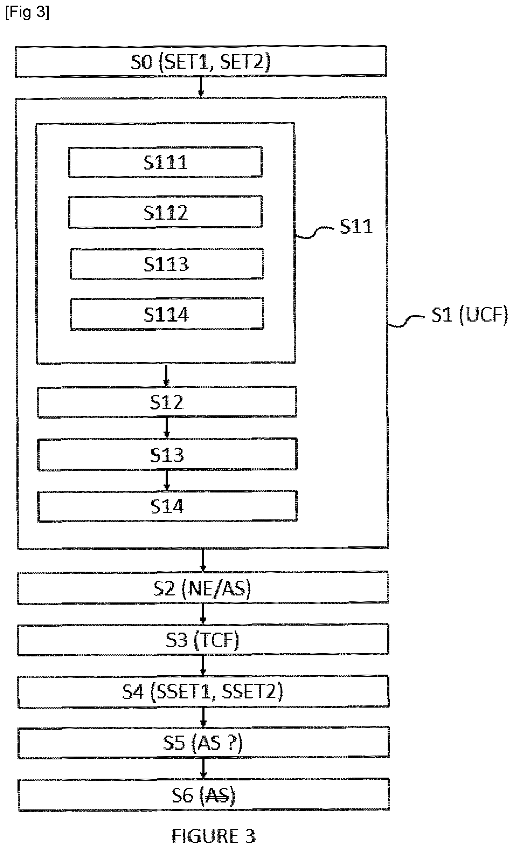

An example of the method according to the invention will now be described in reference to Figure 3.

In a step S0, one or several set SET1, SET2 of application scenarios AS for testing at least some of the application features are determined, either by the device 10 or by a user, preferably through the device 10.

In a step S1, the device 10 calculates the unitary carbon footprint UCF of each application scenario AS of each determined set SET1, SET2 of application scenarios AS.

In the present embodiment, the calculation of the unitary carbon footprint UCF comprises the steps, for each application scenario AS, of identifying (S11) a set of keywords in the application scenario definition, mapping (S12) the set of keyword to a least one reference type, retrieving (S13) the carbon footprint of each reference type from the knowledge database 20 and calculating (S14) the unitary carbon footprint of the application scenario AS by summing up the carbon footprint values for all mapped reference types.

Preferably, the identification of the set of keywords in the application scenario definition comprises reading (S111) the terms of the application scenario definition in an application case repository, correcting (S112) spelling errors, tokenizing (S113) the corrected terms and removing (S114) stop words and duplicates.

This identification may be done by applying a Natural Language Processing (NLP) technique on the applications features of the given application scenario. The NLP allows to pre-process the text information of the application features by checking and correcting the spelling, removing stop words and applying stemming and lemmatization to improve tokens and remove duplicates.

In a first example, an application scenario entitled "Order products on a leading retailer's e-commerce website" may be defined by the following application scenario definition: "The system shall allow for online product ordering by bowsing image either by the customer or the sales agent. For customers, this will elimnate the curent delay between their decision to buy and the placement of the order".

The identification of the set of keywords in the application scenario definition comprises at first reading the terms of the application scenario definition in an application case repository using NLP technique then correcting spelling errors using algorithmic operations such as replacement, deletion, transposition and insertion e.g. as follows: "The system shall allow for on-line product ordering by browsing image either by the customer or the sales agent. For customers, this will eliminate the current delay between their decision to buy and the placement of the order".

Then, a tokenization method is applied to split the sentence into smaller units, called tokens, such as words, terms, symbols: "The, system, shall, allow, for, on-line, product, ordering, by, browsing, image, either, by, the, customer, or, the, sales, agent, For, customers, this, will, eliminate, the, current, delay, between, their, decision, to, buy, and, the, placement, of, the, order".

The tokens are then processed to remove the most commonly used words (referred to as "stop words") and duplicates: "agent, allow, browsing, buy, current, customer, decision, delay, either, eliminate, image, on-line, order, ordering, placement, product, sales, system".

The tokens are then lemmatized and duplicated tokens are removed to improve the efficacy of them: "agent/agent, allow/allow, browsing/browse, buy/buy, current/current, customer/customer, decision/decision, delay/delay, either/either, eliminate/eliminate, image/image, on-line/on-line, order/order, ordering/order, placement/placement, product/product, sales/sale, system/system"

The processed tokens are then matched with tokens stored in the knowledge database 20. In this first example, the processed tokens are associated to reference tokens corresponding to the function "Image" that allows to generate an image.

In a second example, another application scenario entitled "Print the electronic health record of a patient using a leading Healthcare Technology product" may be defined by the following application scenario definition:
"- Double click reportrequest.exe and enter in the username <your account>, password <your password>. Click 'Ok'
- Within the Report Scope box, ensure that the Report Scope dropdown is set to "Encounter"
- In the Name field, type the test patient's last nome <ZZZTEST,*> and press enter
- Select the test patient and appropriate encounter. Click 'Ok'
- Under Event Status, click the dropdown arrow and select 'All results'
- In the bottom left under Template Selection, choose "Master Report with Confidential" for the report type
- On the right side in the Purpose section, select "Other" from the drop-down
- In the bottom right, Output type should have PDF selected
- Click the Print button to save the PDF
- Open PDF from saved location. Click Print button to print in A4 format".

The spelling error correction leads to the following group of terms:
"- Double-click reportrequest.exe and enter in the username <your account>, password <your password>. Click 'Ok'
- Within the Report Scope box, ensure that the Report Scope dropdown is set to "Encounter"
- In the name field, type the test patient's last name <ZZZTEST,*> and press enter
- Select the test patient and appropriate encounter. Click 'Ok'
- Under Event Status, click the drop-down arrow and select 'All results'
- In the bottom left under Template Selection, choose "Master Report with Confidential" for the report type.
- On the right side in the Purpose section, select "Other" from the drop-down
- In the bottom right, Output type should have PDF selected
- Click the Print button to save the PDF.
- Open PDF from saved location. Click Print button to print in A4 format".

Tokenization leads to the following group of terms: "Double-click, and, in, username, account, your, Click, Within, Report, box,, that, Report, dropdown, set, Encounter, In, name, type, test, last, ZZZTEST,*, press, Select, test, and, encounter, Ok, Under, Status,, the, arrow, select, results, In, bottom, under, Selection,, Master Report with Confidential, the, type, On, right, in, Purpose, select, from, drop-down, In, bottom, Output, should, PDF, Click, Print, to, the, Open, from, location, Print, to, in, format".

After removing stop words and duplicates, processed tokens are: "A4, account, All, appropriate, arrow, bottom, box, button, choose, Click, Double-click, dropdown, Encounter, ensure, enter, Event, field, format, last, left, location, Master Report with Confidential, name, Ok, Open, Output, password, patient, PDF, press, Print, Purpose, Report, reportrequestexe, result, right, save, Scope, section, Select, Selection, set, side, Status, Template, test, type, username, Within, ZZZTEST".

The processed tokens are then matched with tokens stored in the knowledge database 20. In this second example, the processed tokens are associated to reference tokens corresponding to the function "Print", that allows to print a document on one or several pages of paper, and to the function "PDF" that allows to generate a PDF file.

Each function is associated in the knowledge database 20 with a unitary carbon footprint value.

In the first example, assuming e.g. that the image has a size of 100 KB, generating an image may e.g. correspond to a unitary carbon footprint value of 147.5 g of carbon dioxide equivalent (CO2e).

In the second example, printing a page may e.g. correspond to a unitary carbon footprint value of 1 g of carbon dioxide equivalent (CO2e) and generating a PDF ay e.g. correspond to a unitary carbon footprint value of 295 g of carbon dioxide equivalent (CO2e).

Some of the functions have a direct carbon footprint impact as they involve a physical resulting action, such as e.g. printing a page on a paper, while some others have an indirect carbon footprint impact as they are performed inside a computing device or system, such as e.g. generating an image file or a PDF file.

In a step S2, the device 10 estimates the number of executions NE of each application scenario AS of the determined set SET1, SET2 of application scenarios AS over a predetermined period of time. In the first example, it is assumed that 100 images are generated each month. In the second example it is assumed that 200 reports are generated each month and that each report comprises 2 pages, meaning that 400 PDF pages will be generated and 400 pages will be printed on paper each month.

In a step S3, the device 10 calculates the total carbon footprint TCF of each application scenario AS over the predetermined period of time associated with the set SET1, SET2 using the calculated unitary carbon footprint UFC of said application scenario AS and the estimated number of executions NE of said application scenario AS.

Considering a period of time of one year, the total carbon footprint TCF for the application scenario AS of the first example is equal to: 100 x 12 x 147.5 g = 177 000 g = 177 kg of carbon dioxide equivalent (CO2e) per year.

Considering a period of time of one year, the total carbon footprint for the application scenario AS of the second example is equal to: 400 x 12 x 1 g + 400 x 12 x 295 g = 4 800 g + 708 000 g = 4,8 kg + 708 kg = 712,8 kg of carbon dioxide equivalent (CO2e) per year.

For example, a suggested way to reduce carbon foot print may be as follows:
"- Print Option in A4 Format
Recommendation: **Replace**
   - Send a mail with link to the Report
   - Send a mailer with the contents in the body of the mailer (Non sensitive information)
   - Send as a mailer as an attachment".

In a step S4, the device 10 determines in each set SET1, SET2 of application scenarios AS a subset SSET1, SSET2 of the set of application scenarios AS using the calculated total carbon footprint of each application scenario AS. For example, by selecting each application scenario AS for which the total carbon footprint is lower than a predetermined threshold. In the example of Figure 2, the first set SET1 comprises three application scenarios AS and the subset SSET1 comprises only one application scenario AS with the lowest carbon footprint, the second set SET2 comprises five application scenarios AS and the subset SSET2 comprises three application scenarios AS with the lowest carbon footprint.

In a step S5, one or several application scenarios AS to be modified or removed may be manually selected by a user in each subset SSET1, SSET2. The selection is advantageously based on the business impact of the application features associated with each application scenario (importance/priority of the features in production) and/or the expected number of executions of each application case (corresponding to an application scenario) during production of the software application.

In a step S6, one or several application scenarios AS in each determined subset SSET1, SSET2 are modified and/or removed from the software application to reduce the carbon footprint of the software application.

Once modified, the software application may be entered in production phase with a decreased carbon footprint than the one of the originally designed software application. For example, if there are ten application scenarios in a set of application scenarios and that the application scenarios have each respectively the following total carbon footprint: 100 kg, 200 kg, 300 kg, 400 kg, 500 kg, 600 kg, 700 kg, 800 kg, 900 kg and 1000 kg and if the predetermined threshold is e.g. 500 kg, then only the features of the application scenarios having a total carbon footprint values smaller than 500 kg and only the critical features of the application scenarios having a total carbon footprint values greater than 500 kg, for example the ones at 800 kg and 1000 kg, may be kept in the application to limit the carbon emission during the production phase.

The invention allows limiting the carbon footprint during test phase in a simple and efficient way.

## Claims

1. A method for reducing the carbon footprint of a software application, said software application being **characterized by** a set of application features, said method, operated during the test phase of the software application, comprising the steps of, for at least one determined set (SET1, SET2) of application scenarios (AS) for testing at least some of said application features and for each determined set (SET1, SET2) of application scenarios (AS):
- calculating (S1) the unitary carbon footprint (UCF) of each application scenario (AS) of the determined set (SET1, SET2) of application scenarios (AS),
- estimating (S2) the number of executions (NE) of each application scenario (AS) of the determined set (SET1, SET2) of application scenarios (AS) over a predetermined period of time,
- calculating (S3) the total carbon footprint (TCF) of each application scenario (AS) over said predetermined period of time using the calculated unitary carbon footprint (UCF) and the estimated number of executions (NE) of each application scenario (AS),
- determining (S4) a subset (SSET1, SSET2) of the set of application scenarios (SET1, SET2) using at least the calculated total carbon footprint (TCF),
- modifying or removing (S6) from the software application at least one application scenario (AS) of the determined subset (SSET1, SSET2) to reduce the carbon footprint of the software application.

2. The method according to claim 1, the determination (S4) of the subset (SSET1, SSET2) comprises selecting only the application scenarios (AS) for which the total carbon footprint (TCF) of each application scenario (AS) is lower than a predetermined threshold.

3. The method according to any of claims 1 or 2, said method comprising, between the step (S4) of determining a subset (SSET1, SSET2) of the set (SET1, SET2) of application scenarios (AS) and the step (S6) of modifying or removing at least one application scenario (AS) of the determined subset (SSET1, SSET2), a step (S5) of selecting, automatically or manually, the at least one application scenario (AS) to be modified or removed based on the business impact of said application scenario (AS) and/or the number of execution (NE) of said application scenario (AS) expected during the use of the software application in production.

4. The method according to any of claims 1 to 3, wherein, each application scenario (AS) being defined by a plurality of terms called "the application scenario definition", the calculation of the unitary carbon footprint comprises the steps, for each application scenario (AS), of:
- identifying (S11) a set of keywords in the application scenario definition,
- mapping (S12) the set of keywords to a least one reference type,
- retrieving (S13) the carbon footprint of each reference type into a knowledge database (20),
- calculating (S14) the unitary carbon footprint (UCF) of the application scenario (AS) by summing up the carbon footprint values for all mapped reference types.

5. The method according to the preceding claim, wherein the identification of the set of keywords in the application scenario definition comprises:
- reading (S111) the terms of the application scenario definition in an application case repository,
- correcting (S112) spelling errors,
- tokenizing (S113) the corrected terms,
- removing (S114) stop words and duplicates.

6. The method according to any one of the preceding claims, wherein the predetermined period of time is equal to one month or one year.

7. The method according to any one of the preceding claims, wherein the threshold is predetermined in order to keep at least a predefined percentage of application scenarios (AS) in the subset (SSET1, SSET2).

8. The method according to any of the preceding claims, said method being operated on several different sets (SET1, SET2) of application scenarios (AS) of the software application.

9. A computer program product **characterized in that** it comprises a set of program code instructions which, when executed by one or more processors, configure said processor or processors to implement a method according to any of the preceding claims.

10. A device (10) for reducing the carbon footprint of a software application during a test phase, said software application being **characterized by** a set of application features, said device (10) being configured, for at least one determined set (SET1, SET2) of application scenarios (AS) for testing at least some of said application features and for each set (SET1, SET2) of application scenarios (AS), to:
- calculate the unitary carbon footprint (UCF) of each application scenario (AS) of the determined set of application scenarios (AS),
- estimate the number of executions of each application scenario (AS) of the determined set (SET1, SET2) of application scenarios (AS) over a predetermined period of time,
- calculate the total carbon footprint (TCF) of each application scenario (AS) over said predetermined period of time using the calculated unitary carbon footprint (UCF) and the estimated number of executions of each application scenario (AS),
- determine a subset (SSET1, SSET2) of the set (SET1, SET2) of application scenarios (AS) using at least the calculated total carbon footprint (TCF),
- modify or remove from the software application at least one application scenario (AS) of the determined subset (SSET1, SSET2) to reduce the carbon footprint of the software application.

11. The device (10) according to the preceding claim, said device (10) being configured to select, automatically or manually, the at least one application scenario (AS) to be modified or removed based on the business impact of said application scenario (AS) and/or the number of executions (NE) of said application scenario (AS) expected during the use of the software application in production.

12. The device (10) according to any one of claims 10 or 11, wherein, each application scenario (AS) being defined by a plurality of terms called "the application scenario definition", for calculating the unitary carbon footprint (UCF) for each application scenario (AS), the device (10) is configured to:
- identify a set of keywords in the application scenario definition,
- map the set of keywords to a least one reference type,
- retrieve the carbon footprint of each reference type into a knowledge database (20),
- calculate the unitary carbon footprint (UCF) of the application scenario (AS) by summing up the carbon footprint values for all mapped reference types.

13. The device (10) according to the preceding claim, wherein, for identifying the set of keywords in the application scenario definition, the device (10) is further configured for:
- read the terms of the application scenario definition in an application case repository,
- correct spelling errors,
- tokenize the corrected terms,
- remove stop words and duplicates.

14. The device (10) according to any of the preceding 10 to 13, being configured to operate on several different sets of application scenarios (AS) of the software application.

15. A computing system (1) for reducing the carbon footprint of a software application during a test phase, said software application being **characterized by** a set of application features, said computing system (1) comprising a device (10) according to any of claims 10 to 14 and a knowledge database (20).
